# EUROPÄISCHE PATENTSCHRIFT

(11) **EP 1 474 964 B1**
(45) Veröffentlichungstag und Bekanntmachung des Hinweises auf die Patenterteilung: **29.08.2012**
(21) Anmeldenummer: 04008196.0
(22) Anmeldetag: 05.04.2004
(51) Int. Cl.: A01F 12/28

(54) **Verfahren und Vorrichtung zur Veränderung der Durchlassöffnungen an einer Abscheidefläche, insbesondere die eines Dreschkorbes einer Erntemaschine**
Method and device for adjusting the through holes of a separating surface, in particular of a threshing concave of a harvester
Méthode et dispositif d'ajustement des ouvertures d'une surface de séparation, en particulier d'un contre-batteur d'une machine de récolte

(30) Priorität: 28.04.2003 DE 10319254
(43) Veröffentlichungstag der Anmeldung: 10.11.2004
(73) Patentinhaber: CLAAS Selbstfahrende Erntemaschinen GmbH, 33428 Harsewinkel (DE)
(72) Erfinder: Esken, Dirk, 59494 Soest-Meckingen (DE); Schwersmann, Berthold, 49186 Bad Iburg (DE)

(56) Entgegenhaltungen:
- DE-A- 3 017 988
- DE-A- 3 832 996
- DE-A- 19 506 060
- US-A- 3 537 459

## Beschreibung

Die Erfindung betrifft ein Verfahren und eine Vorrichtung zur Veränderung der Durchlassöffnungen eines Dreschkorbes in einer landwirtschaftlichen Arbeitsmaschine - insbesondere einem selbstfahrenden Mähdrescher - gemäß dem Oberbegriff der Ansprüche 1 und 5.

Durch den Abstand der Schlagleisten und Drähte eines Dreschkorbes zueinander werden die einzelnen Durchlassöffnungen der Korbabscheidefläche bestimmt. Die Größe der Durchlassöffnungen ist entscheidend für die Effizienz des Ausdruschs verschiedener Erntegutarten. So sind bei unterschiedlichen Erntegutarten unterschiedlich große Durchlassöffnungen erforderlich um einen einwandfreien Ausdrusch der Körner zu gewährleisten. Für Maiskörner werden beispielsweise größere Durchlassöffnungen benötigt als für Weizenkörner.

Bei zu großen Durchlassöffnungen wird ein hoher Anteil von Nichtkornbestandteilen am Dreschkorb abgeschieden, was zu einer stärkeren Verunreinigung der am Dreschkorb abgeschiedenen Körner führt. Hingegen führen zu kleine Durchlassöffnungen u.a. bei zu großen Körnern zum Verstopfen der Durchlassöffnungen und damit des Dreschkorbes. Hierdurch erhöht sich die Gefahr des Körnerbruchs, da sich das nicht ausgedroschene Erntegut oberhalb der Kornabscheidefläche durch das weiter nachfolgende Erntegut aufstaut und zudem unvermindert durch die Dreschtrommel kontaktiert wird.

In der DE 3832996 wird eine Vorrichtung zur Verstellung des Abstandes zwischen zwei aufeinanderfolgenden Stäben an einem Dreschkorb offenbart. Die Stäbe sind Bestandteil des Dreschkorbes und legen die Durchlassgröße für das Erntegut fest. Durch das Verstellen des Abstandes zwischen zwei aufeinanderfolgenden Stäben soll mit einem einzigen Dreschkorb, ohne Ausbau von Organen, jede Art von Erntegut ausreichend gedroschen und abgeschieden werden.

Dies wird dadurch erreicht, dass jeder zweite Stab drehbar gelagert ist. An diesen drehbaren Stäben sind Klappenelemente ortsfest angebracht. Durch das Drehen der Stäbe werden die Klappenelemente in die entsprechende Drehrichtung und in den vor den drehbaren Stäben befindlichen Raum bewegt. Der Drehstab selbst wird durch die Bewegung an den nicht drehbaren Stab herangeführt.

Nachteilig hieran ist insbesondere die Stellung, die die Klappenelemente in der aufgeschwenkten Position einnehmen. In diesem abgesenkten Zustand sind die Klappenelemente schräg unterhalb der Durchlassöffnung angeordnet. Auf diese Weise wird der Durchlass des Ernteguts behindert. Der Ausdrusch des Ernteguts wird eingeschränkt, da der freie Raum unterhalb der Abscheidefläche des Dreschkorbes durch die Klappenelemente teilweise ausgefüllt wird, was letztlich die Weiterförderung des Ernteguts nach dem Ausdrusch einschränkt. Da das Erntegut so nicht mehr ungehindert zwischen den Stäben durchfallen kann, kann es zu Verstopfungen in Verbindung mit Körnerbruch kommen.

Der Erfindung liegt daher die Aufgabe zugrunde, ein Verfahren und eine Vorrichtung zum Verändern von Durchlassöffnungen in einer landwirtschaftlichen Erntemaschine - insbesondere eines Mähdreschers - zu entwickeln, welches konstruktiv einfach und kostengünstig umsetzbar ist und den sauberen Ausdrusch unterschiedlichen Ernteguts ohne Beeinträchtigungen zulässt.

Indem die Weite der Durchlassöffnungen durch zumindest eine unterhalb der Korbabscheidefläche beweglich angeordnete Einstellvorrichtung veränderbar ist, bedarf es keiner Veränderung des bereits vorhandenen Dreschkorbes. Zudem kann durch die Veränderung der Weite der Durchlassöffnungen sichergestellt werden, dass eine Abscheidung im Einlassbereich des Dreschkorbes vermieden wird, sodass zunächst durch die Wirkung der Fliehkraft auf die ausgedroschenen Körner eine Erhöhung der Konzentration von Körnern im Dreschspalt im Bereich des Dreschkorbes erfolgen kann, bevor ein Korn-Spreu Gemisch am Dreschkorb abgeschieden wird. Dies hat insbesondere den Vorteil, dass der Anteil von abgeschiedenen Nichtkornbestandteilen reduziert werden kann, sodass Überlastungserscheinungen an nachfolgenden Arbeitsorganen, insbesondere in der Reinigungseinrichtung auf einfache Weise vermieden werden können.
Die Einstellvorrichtung ist dem Dreschkorb zugeordnet und befindet sich erfindungsgemäß unterhalb der Korbabscheidefläche. Hierdurch kann der Dreschkorb beim Ernteeinsatz voll belastet werden, ohne dass die Einstellvorrichtung den Erntegutausdrusch beeinträchtigt. Eine Verstellung von einzelnen Stäben bzw. Schlagleisten zueinander wird auf diese Weise entbehrlich.

Durch das Heranführen der Einstellvorrichtung von unten zwischen die Drähte des Dreschkorbes bleibt der eigentliche Dresch- und Arbeitsbereich oberhalb bzw. auf der Korbabscheidefläche unberührt.

Das seitliche und/oder aufwärtige Verschieben der Einstellvorrichtung begünstigt den Ausdrusch des Ernteguts. So kann die Einstellvorrichtung in ihrer Ausgangsposition so angeordnet werden, dass die an ihr vorbeifallenden Körner, ohne durch die Einstellvorrichtung selbst eingeschränkt zu werden, weiterbefördert werden können. Ein Erntegutstau wird damit ausgeschlossen. Zudem fügen sich die Einstellzinken jeweils in den Raum zweier benachbarter Schlagleisten ein, ohne dass es einer Abstandsveränderung der Schlagleisten oder Drähte zueinander bedarf, was eine erhebliche technische Vereinfachung darstellt.

Aufgrund der einfachen Konstruktion des gesamten Einstellmechanismus können die Einstellzinken bei Nichtinanspruchnahme abgesenkt werden, ohne den weiteren Ernteprozess zu beeinträchtigen, wodurch die Körner unmittelbar ausgedroschen werden, ohne in ihrer Weiterförderung beeinträchtigt zu werden. Da das Absenken erst bei einer bestimmten erhöhten Konzentration des Ernteguts an der Korbabscheidefläche erfolgt, wird entsprechend sauberes Erntegut abgeschieden, da die Nichtkornbestandteile zuvor weiterbefördert wurden.

Dadurch, dass die Einstellvorrichtung aus mehreren Einstellzinken besteht, die über zumindest eine Zinkenleiste miteinander in Wirkverbindung stehen, wobei die Zinkenleiste über mindestens einen an einer Schaltwelle angeordneten Nocken angesteuert wird, erfolgt die Einstellung der Weite der Durchlassöffnungen synchron steuert wird, erfolgt die Einstellung der Weite der Durchlassöffnungen synchron und gleichzeitig. Dies gewährleistet einen gleichmäßigen Ausdrusch.

Diese synchrone Verstellung kann auf konstruktiv einfache Weise auf mehrere in Reihe geschaltete Zinkenleisten erweitert werden, indem alle Zinkenleisten über eine einzige Schaltwelle angesteuert werden.

Ein besonders gleichmäßiger Ausdrusch wird dadurch erreicht, dass die Einstellzinken der Einstellvorrichtung im abgesenkten Zustand auf der vertikalen Ebene unterhalb der Drähte und/oder Schlagleisten angeordnet sind. Durch diese Anordnung können die ausgedroschenen Körner ungehindert durch den Dreschkorb hindurchtreten, ohne dass die Einstellzinken den hierfür notwendigen Raum einschränken.

Die höhenverstellbare Anordnung der Einstellvorrichtung zwischen den Schlagleisten bewirkt, dass die Einstellzinken gleichfalls höhenverstellbar in der Hochstellposition zwischen den Drähten des Dreschkorbes angeordnet werden können. So ist es möglich, die Einstellzinken tiefer als die Drähte zu positionieren. Hierdurch werden beim Dreschvorgang zunächst und hauptsächlich die Schlagleisten und Drähte belastet und erst danach die Einstellzinken. Diese Belastungsverteilung dient der Schonung der Einstellvorrichtung und insbesondere der Einstellzinken. Andererseits können die Einstellzinken aber auch auf einer Ebene mit den Drähten angeordnet werden. Damit wird eine einheitliche Abscheideoberfläche erzielt.

Auf konstruktiv einfache Weise kann der Abstand der Einstellvorrichtungen zueinander und/oder der Abstand der Einstellzinken zueinander gleich oder unterschiedlich sein. So kann die Größe der Durchlassöffnungen zusätzlich variiert werden.

Durch die Auswechselbarkeit der gesamten Einstellvorrichtung wird sichergestellt, dass der Austausch oder die Entfernung der Einstellvorrichtung auch während des Einsatzes auf einfache Weise vorgenommen werden kann. Dies hat insbesondere den Vorteil, dass sehr schnell und ohne aufwendige Umbauarbeiten auf sich ändernde Erntebedingungen reagiert werden kann.

Weitere vorteilhafte Ausgestaltungen sind Gegenstand weiterer Unteransprüche und werden nachfolgend anhand von Zeichnungen näher erläutert.

Es zeigt:
- Figur 1:: in Schnittdarstellung nach der Linie I-I der Fig. 2 einen Dreschkorb mit abgesenkter Einstellvorrichtung
- Figur 2:: eine perspektivische Ansicht eines Dreschkorbabschnittes mit Einstellvorrichtung und Schaltwelle
- Figur 3:: eine Schnittdarstellung eines Teiles des Dreschkorbes gemäß der Schnittlinie der Fig. 4
- Figur 4:: einen Schnitt nach der Linie IV-IV in Fig. 2 mit abgesenkter Einstellvorrichtung
- Figur 5:: einen Schnitt nach der Linie V-V in Fig. 2 entsprechend der Fig. 4, jedoch mit angehobenen hochgestellten Einstellvorrichtungen

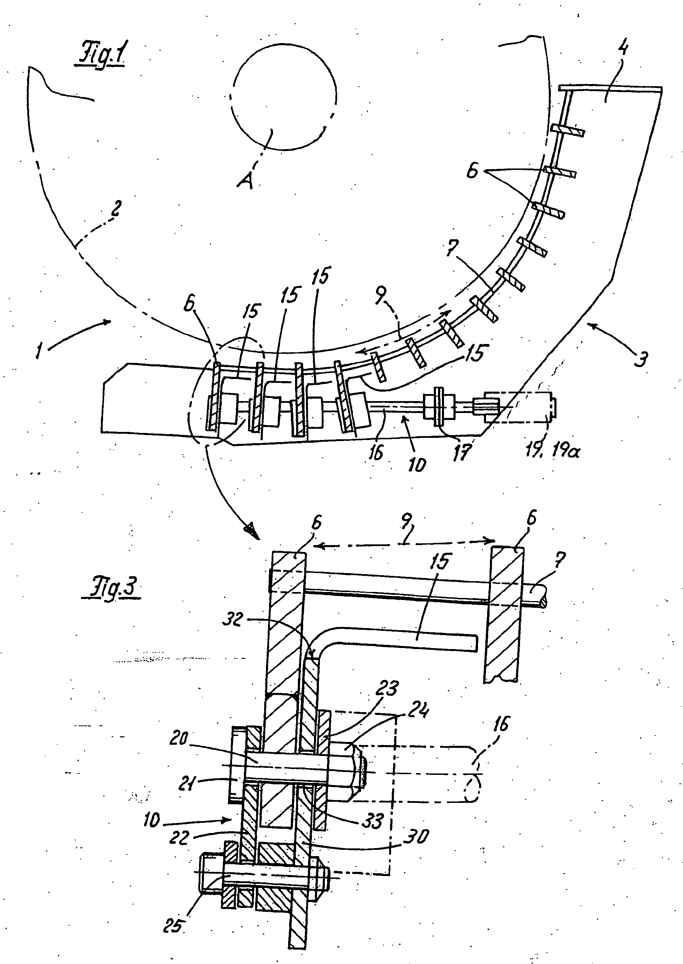

Figur 1 zeigt das Dreschwerk 1 eines nicht näher dargestellten Mähdreschers in Seitenansicht, welches eine antreibbare Dreschtrommel 2 und einen dazugehörigen Dreschkorb 3 aufweist. Der Dreschkorb 3 besteht aus einem Rahmen 4 und mehreren in diesen Rahmen 4 ortsfest integrierte Stege 5 und Schlagleisten 6.

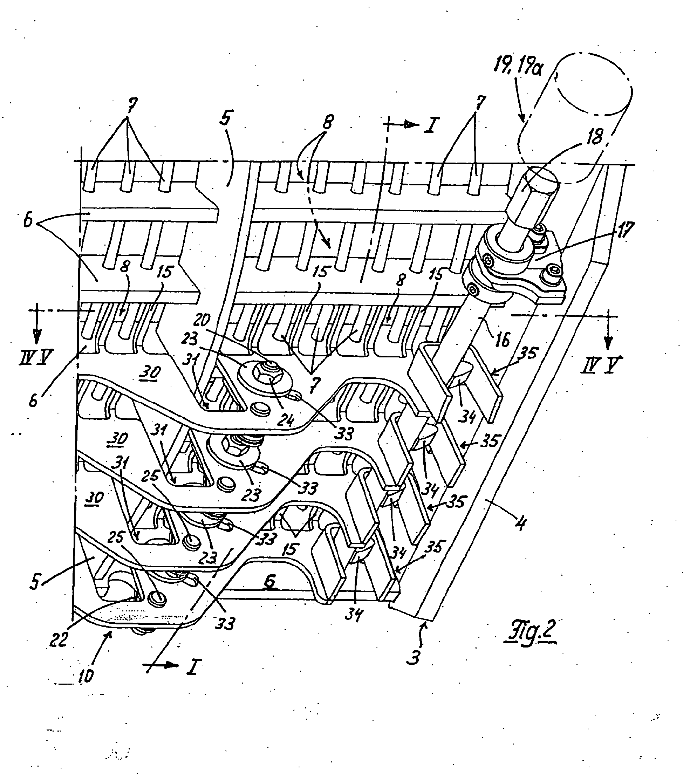

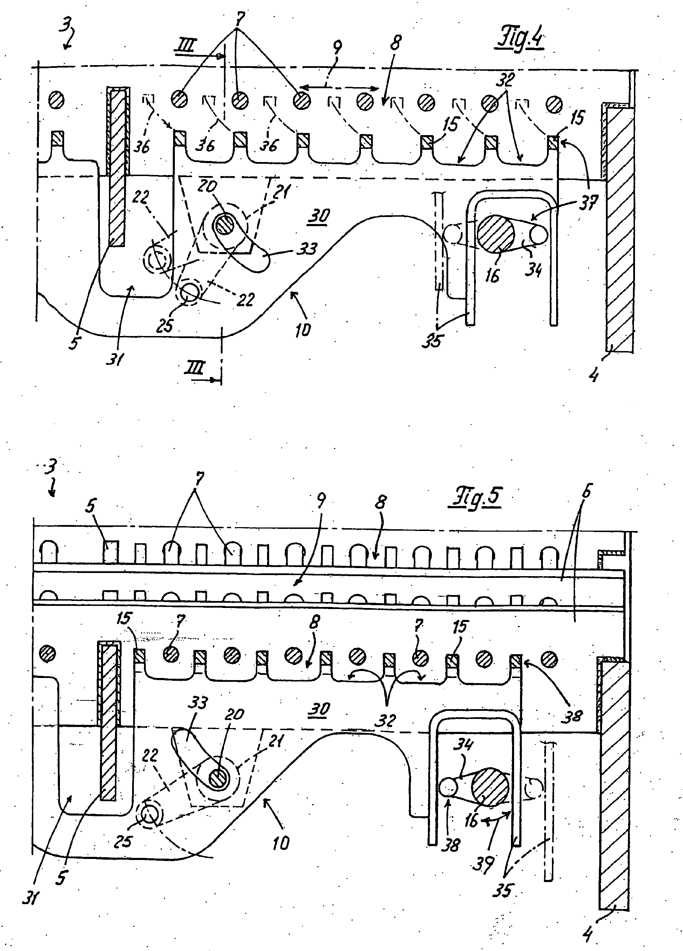

Die Figur 2 zeigt eine perspektivische Darstellung der Einstellvorrichtung 10 unterhalb des Dreschkorbes 3, wobei mehrere Zinkenleisten 30 hintereinander in Reihe geschaltete sind. Die Figur 2 veranschaulicht, dass auf konstruktiv einfache Weise beliebig viele Zinkenleisten 30 unterhalb des Dreschkorbes 3 angeordnet werden können. Somit könnte die Einstellvorrichtung 10 grundsätzlich auch den gesamten Bereich unterhalb des Dreschkorbes 3 abdecken. Um ein synchrones Verstellen zu erreichen werden die Zinkenleisten 30 im Bedarfsfall alle gleichzeitig und synchron über eine einzjge Schaltwelle 16 angesteuert. Die Verstellung erfolgt nach dem anhand der Figur 4 und 5 beschriebenem Prinzip.
Durch Bohrungen innerhalb der Schlagleisten 6 verlaufen parallel zueinander Drähte 7. Durch den Abstand der Drähte 7 und der Schlagleisten 6 zueinander werden die einzelnen Durchlassöffnungen 8 der Korbabscheidefläche 9 gebildet. Die Größe der Durchlassöffnungen 8 bestimmt den Zerkleinerungsgrad der Gutmatte zwischen der Dreschtrommel und dem Dreschkorb. Bei unterschiedlichen Erntegutarten sind unterschiedlich große Durchlassöffnungen 8 erforderlich, um einen einwandfreien Ausdrusch und Abscheidung der Körner zu gewährleisten.

Unterhalb der Korbabscheidefläche 9 ist die erfindungsgemäße Einstellvorrichtung 10 angeordnet. Mit dieser Einstellvorrichtung 10 ist die Weite der Durchlassöffnungen 8 veränderbar. Die Einstellvorrichtung 10 besteht aus einer Vielzahl von Einstellzinken 15, die hinter- und nebeneinander, getrennt durch benachbarte Schlagleisten 6, angeordnet sind und sich im Winkel zu der in Figur 1 abgebildeten Dreschtrommeldrechachse (A) radial, der Korbform entsprechend, erstrecken. Die Einstellzinken bilden mit einer Zinkenleiste 30 eine Baueinheit. Die Schaltwelle 16 dient der Verstellung der Einstellzinken 15 bzw. der Zinkenleiste 30 und ist außenseitig über eine Konsole 17 ortsfest mit dem Rahmen 4 verbunden. Am rückwärtigen Ende der Schaltwelle 16 ist dieser zur Verstellung eine Schlüsselweite 18 angeformt. Hiermit kann die Verstellung manuell erfolgen. In einer Weiterbildung der Erfindung kann die Verstellung mittels eines strichpunktiert dargestellten Elektromotors 19 (Fig. 1) oder eines Einstellhebels 19 a erfolgen.

In der Figur 3 ist eine Detailansicht des in Figur 1 strichliniert gekennzeichneten Bereichs im Schnitt abgebildet. Im einzelnen ergibt sich hieraus die Anordnung der Einstellvorrichtung 10 und der Einstellzinken 15 zu den Schlagleisten 6 und den Korbdrähten 7.

In der Ausgangsstellung bzw. Ruhestellung befindet sich der Einstellzinken 15, wie in der Figur 1 dargestellt, unterhalb des Drahtes 7 und auf derselben vertikalen Ebene. Die Zinkenleiste 30 ist durch einen Bolzen 20 mit einer zusätzlich an der Schlagleiste 6 angeschweißten Konsole 17 bewegbar verbunden. Zwischen dem Schraubenkopf 21 und der Konsole 17 ist eine drehbare Steuerlasche 22 integriert. Dem freien Ende des die Konsole 17 durchsetzenden Bolzens 20 ist die Einstellvorrichtung 10 zugeordnet, die durch eine Abdeckscheibe 23, welche mittels einer Mutter 24 fixiert wird, eine bestimmte Anordnung zur Schlagleiste 6 erhält. Die Steuerlasche 22 ist mit einem weiteren Bolzen 25 verbunden. Diese Verbindung entspricht der zuvor beschriebenen Verbindung des Bolzens 20 und wird im Weiteren noch näher beschrieben.

Die Funktion des Zusammenwirkens der Anordnung des Bolzen 20, 25, der Steuerlasche 22 und der Einstellvorrichtung 10 ergibt sich aus den Figuren 4 und 5.

Die Figur 4 zeigt die Einstellvorrichtung 10 in abgesenktem Zustand. Die Einstellzinken 15 befinden sich unmittelbar unter den Drähten 7 des Dreschkorbes 3. Die Zinkenleisten 30 folgen wie die Schlagleisten 6 der Geometrie des Dreschkorbes 3. Im Bereich der Stege 5 sind die Zinkenleisten 30 mit Aussparungen 31 versehen, die ein seitliches Verschieben der Zinkenleiste 30 der Einstellvorrichtung 10 ermöglicht. Im Bereich zwischen den Einstellzinken 15 weist die Zinkenleiste 30 Vertiefungen 32 auf, die ein Bewegen der Einstellzinken 15 in die Zwischenräume der Drähte 7 ermöglicht, ohne dass die Zinkenleiste 30 in ihrer Einstellmöglichkeit durch die vorhandenen Drähte 7 des Dreschkorbes 3 eingeschränkt wird.

Hinter der Zinkenleiste 30 ist in den Figuren 4, 5 strichliniert eine Konsole 17 angedeutet. Diese Konsole 17 ist fest mit der Schlagleiste 6 verbunden. Die Konsole 17 steht ihrerseits mit einer ortsfest aber drehbar an der Zinkenleiste 30 angeordneten Steuerlasche 22 in Wirkverbindung. Die Steuerlasche 22 ist ebenfalls strichliniert dargestellt und in ihren Endbereichen mit den jeweiligen Schraubenbolzen 20, 25 drehbar mit der Konsole 17 und der Zinkenleiste 30 verbunden. Beim Verschieben der Einstellvorrichtung 10 entlang der Zinkenleiste 30 führt der Bolzen 20 die Zinkenleiste 30 entlang eines in die Zinkenleiste 30 eingelassenen Langloches 33. Durch die Verbindung zwischen Steuerlasche 22, Zinkenleiste 30 und Konsole 17 sowie der Form des Langloches 33 werden die Einstellzinken 15 in die entsprechende Position verschwenkt. Die Form des Langloches 33 bestimmt dabei die Kurvenbahn 36 (Fig. 4) auf der sich die Einstellzinken 15 von ihrer Absenkposition 37 in ihre Hochstellposition 38 zum wenigstens teilweisen Verschließen der Durchlassöffnung 8 bewegen.
In der abgesenkten Position der Einstellvorrichtung 10 sind die Einstellzinken 15 unmittelbar unterhalb der Drähte 7 des Dreschkorbes 3 angeordnet. Diese Position wird durch das Verdrehen der Nocken 34 eingestellt. Die Nocken 34 bewegen sich demgemäss innerhalb von Schaltkulissen 35 und liegen in Außereingriffsposition 37 der Einstellzinken 15 bündig an der rechten Seite der Schaltkulissen 35 an. Die Schaltkulisse 35 ist vorzugsweise U - förmig ausgeführt. Um die Einstellung der Vorrichtung 10 vorzunehmen, kann der auf der Schaltwelle 16 ortsfest integrierte Nocken 34 manuell, mechanisch oder hydraulisch angesteuert werden und in Pfeilrichtungen 39 verdreht werden.

Das Absenken der Einstelleinrichtung 10 ist immer dann gemäß der Erfindung vorzusehen, wenn sich hinreichend viele Körner an der Korbabscheidefläche 9 konzentriert haben. Durch das darauf erfolgende Absenken der Einstelleinrichtung 10 gelangen die angesammelten Körner mit einem geringen Anteil von Nichtkornbestandteilen an den Drähten 7 vorbei in die nicht näher dargestellten nachgeordneten Arbeitsorgane wie etwa der Reinigungseinrichtung.

Wie aus der Figur 5 ersichtlich, befindet sich die Einstellvorrichtung 10 nach vollständiger Verstellung des Nockens 34 in gehobener Position, wobei sich die Einstellzinken 15 dann in ihrer Hochstellposition 38 befinden. Der Nocken 34 liegt dann bündig an der linken Seite der Schaltkulisse 35 an. Hierdurch wird die Zinkenleiste 30 um die Länge des Nockens 34 nach links verschoben. Damit die Einstellzinken 15 der Zinkenleiste 30 genau zwischen die Drähte 7 des Dreschkorbes 3 positioniert werden, ist die Zinkenleiste 30, wie bereits zuvor beschrieben, mit einer an den Schlagleisten 6 ortsfest angeordneten Konsole 17 verbunden.

Durch das Ansteuern des Nockens 34 wird die Zinkenleiste 30 schräg aufwärts verschoben. Diese Verschiebung wird dadurch erreicht, indem die Steuerlasche 22 um das identische Maß wie die Zinkenleiste 30 nach links verschoben wird. Hierdurch führt der mit der Steuerlasche 22 und der Konsole 17 in Wirkverbindung stehende Bolzen 20 die Zinkenleiste 30 entlang des Langloches 33. Auf diese Weise erhält die Einstellvorrichtung 10 die genaue Einstellung.

Es liegt im Rahmen der Erfindung, dass das beschriebene Verfahren und die zur Durchführung des Verfahrens geeignete Vorrichtung nicht nur auf Dreschkörbe 3 einer landwirtschaftlichen Erntemaschine gemäß dem dargestellten Ausführungsbeispiel beschränkt sind, sondern an beliebigen Arbeitsmaschinen einsetzbar sind, um die beschriebenen Effekte zu erzielen.

### Bezugszeichenliste:

- 1: Dreschwerk
- 2: Dreschtrommel
- 3: Dreschkorb
- 4: Rahmen
- 5: Steg
- 6: Schlagleiste
- 7: Drähte
- 8: Durchlassöffnungen
- 9: Korbabscheidefläche
- 10: Einstellvorrichtung
- 15: Einstellzinken
- 16: Schaltwelle
- 17: Konsole
- 18: Schlüsselweite
- 19: Elektromotor
- 19a: Stelleinrichtung
- 20: Bolzen
- 21: Schraubkopf
- 22: Steuerlasche
- 23: Abdeckscheibe
- 24: Schraubmutter
- 25: Bolzen
- 30: Zinkenleiste
- 31: Aussparung
- 32: Vertiefung
- 33: Langloch
- 34: Nocken
- 35: Schaltkulisse
- 36: Kurvenbahn
- 37: Absenkposition
- 38: Hochstellposition
- 39: Pfeilrichtung
- A: Dreschtrommeldrehachse

## Patentansprüche

1. Verfahren zum Verändern von Durchlassöffnungen (8) an einer Abscheidefläche eines Dreschkorbes (3). bei einer landwirtschaftlichen Erntemaschine, durch wenigstens ein Verstellmittel, wobei der Dreschkorb (3) aus mindestens einem Rahmen (4), mehreren Schlagleisten (6) und Drähten (7) besteht, die die Korbabscheidefläche (9) bilden, wobei die Weite der Durchlassöffnungen (8) durch zumindest eine unterhalb der Korbabscheidefläche (9) beweglich angeordnete Einstellvorrichtung (10) veränderbar ist,
**dadurch gekennzeichnet,**
**dass** die Einstellvorrichtung (10) an zumindest einer verstellbaren Zinkenleiste (30) angeordnete Einstellzinken (15) umfasst, die zwischen einer unterhalb der Drähte (7) auf derselben vertikalen Ebene liegenden Position In eine zwischen benachbarten Drähten (7) liegende Position bewegbar sind.

2. Verfahren zum Verändern der Durchlassöffnungen eines Dreschkorbes nach Anspruch 1,
**dadurch gekennzeichnet, dass**
die Einstellvorrichtung (10) von unten zwischen die Drähte (7) des Dreschkorbs (3) geführt wird.

3. Verfahren zum Verändern der Durchlassöffnungen eines Dreschkorbes nach zumindest einem der vorangegangenen Ansprüche,
**dadurch gekennzeichnet, dass**
die Einstellvorrichtung (10) seitlich und/oder aufwärts zwischen die Drähte (7) geführt wird.

4. Verfahren zum Verändern der Durchlassöffnungen eines Dreschkorbes nach zumindest einem der vorangegangenen Ansprüche,
**dadurch gekennzeichnet, dass**
die Einstellvorrichtung (10) abwärts und/oder seitlich in ihre Ausgangsstellung zurückgeführt wird.

5. Vorrichtung zum Verändern von Durchlassöffnungen (8) an einer Abscheidefläche eines Dreschkorbes (3), bei einer landwirtschaftlichen Erntemaschine, durch wenigstens ein Verstellmittel, wobei der Dreschkorb (3) aus mindestens einem Rahmen (4), mehreren Schlaglelsten (6) und Drähten (7) besteht, die die Korbabscheidefläche (9) bilden, wobei die Weite der Durchlassöffnungen (8) durch zumindest eine unterhalb der Korbabscheidefläche (9) beweglich angeordnete Einstellvorrichtung (10) veränderbar ist,
**dadurch gekennzeichnet,**
**dass** die Einstellvorrichtung (10) aus mehreren Einstellzinken (15) besteht, die über zumindest eine Zinkenleiste (30) miteinander in Wirkverbindung stehen die Einstellvorrichtung (10) an zumindest einer verstellbaren Zinkenleiste (30) angeordnete Einstellzinken (15) umfasst, die zwischen einer unterhalb der Drähte (7) auf derselben vertikalen Ebene liegenden Position In eine zwischen benachbarten Drähten (7) liegende Position bewegbar sind, wobei die Zinkenleiste (30) über mindestens einen an einer Schaltwelle (16) angeordneten Nocken (34) ansteuerbar ist.

6. Vorrichtung zum Verändern der Durchlassöffnung eines Dreschkorbes nach Anspruch 5,
**dadurch gekennzeichnet, dass**
die Einstellzinken (15) unterhalb der Ebene der Drähte (7) angeordnet sind.

7. Vorrichtung zum Verändern der Durchlassöffnung eines Dreschkorbes nach zumindest einem der Ansprüche 5-6,
**dadurch gekennzeichnet, dass**
die Einstellzinken (15) jeweils zwischen zwei benachbarten Schlagleisten (6) und / oder Drähten (7) höhenverstellbar angeordnet sind.

8. Vorrichtung zum Verändern der Durchlassöffnung eines Dreschkorbes nach zumindest einem der Ansprüche 5 - 7,
**dadurch gekennzeichnet, dass**
der Abstand der Einstellvorrichtungen (10) und /oder Einstellzinken (15) zueinander gleich und/oder unterschiedlich ist.

9. Vorrichtung zum Verändern der Durchlassöffnung eines Dreschkorbes nach zumindest einem der Ansprüche 5 - 8,
**dadurch gekennzeichnet, dass**
die Zinkenleiste (30) mittels eines Verbindungselementes (22) mit mindestens einer an der Schlagleiste (6) ortsfest angeordneten Konsole (17) in Wirkverbindung steht.

10. Vorrichtung zum Verändern der Durchlassöffnung eines Dreschkorbes nach zumindest einem der Ansprüche 5-9,
**dadurch gekennzeichnet, dass**
die Zinkenleiste (30) in einem Langloch (33) mittels eines Bolzens (20) geführt wird.

11. Vorrichtung zum Verändern der Durchlassöffnung eines Dreschkorbes nach zumindest einem der Ansprüche 5-10,
**dadurch gekennzeichnet, dass**
der Nocken (34) innerhalb einer Schaltkulisse (35) geführt wird.

12. Vorrichtung zum Verändern der Durchlassöffnung eines Dreschkorbes nach zumindest einem der Ansprüche 5-11,
**dadurch gekennzeichnet, dass**
die Schaltwelle (16) durch eine Stelleinrichtung (19a) geschaltet wird.

13. Vorrichtung zum Verändern der Durchlassöffnung eines Dreschkorbes nach
zumindest einem der Ansprüche 5-12,
**dadurch gekennzeichnet, dass**
die Stelleinrichtung (19a) außenseitig am Dreschkorb (3) angeordnet ist.

14. Vorrichtung zum Verändern der Durchlassöffnung eines Dreschkorbes nach zumindest einem der Ansprüche 5-13,
**dadurch gekennzeichnet, dass**
die Einstellung der Einstellvorrichtung (10) manuell, mechanisch, motorisch und/oder hydraulisch erfolgen kann.

15. Vorrichtung zum Verändern der Durchlassöffnung eines Dreschkorbes nach
zumindest einem der Ansprüche 5 - 14,
**dadurch gekennzeichnet, dass**
die Einstellvorrichtung (10) einen Teilbereich oder den gesamten Bereich unterhalb des Dreschkorbes (3) abdeckt.

16. Vorrichtung zum Verändern der Durchlassöffnung eines Dreschkorbes nach zumindest einem der Ansprüche 5-15,
**dadurch gekennzeichnet, dass**
die Einstellvorrichtung (10) auswechselbar ist.

17. Vorrichtung zum Verändern der Durchlassöffnung eines Dreschkorbes nach zumindest einem der Ansprüche 5 -16,
**dadurch gekennzeichnet, dass**
die Zinkenleiste (30) mit mindestens einer Schaltwelle (16) angesteuert wird.

18. Vorrichtung zum Verändern der Durchlassöffnung eines Dreschkorbes nach zumindest einem der Ansprüche 5-17,
**dadurch gekennzeichnet, dass**
die Zinkenleiste (30) an mindestens einer Stelle angesteuert wird.

## Claims

1. A method of changing passage openings (8) at a separation surface of a threshing concave (3) in an agricultural harvester by at least one adjusting means, wherein the threshing concave (3) comprises at least a frame (4), a plurality of beater bars (6) and wires (7) forming the concave separation surface (9), wherein the width of the passage openings (8) is changeable by at least one adjusting device (10) arranged movably beneath the concave separation surface (9),
**characterised in that**
the adjusting device (10) includes adjusting tines (15) which are arranged on at least one displaceable tine bar (30) and which are movable between a position beneath the wires (7) on the same vertical plane into a position between adjacent wires (7).

2. A method of changing the passage openings of a threshing concave according to claim 1 **characterised in that** the adjusting device (10) is guided from below between the wires (7) of the threshing concave (3).

3. A method of changing the passage openings of a threshing concave according to at least one of the preceding claims **characterised in that** the adjusting device (10) is guided laterally and/or upwardly between the wires (7).

4. A method of changing the passage openings of a threshing concave according to at least one of the preceding claims **characterised in that** the adjusting device (10) is returned downwardly and/or laterally into its initial position.

5. Apparatus for changing passage openings (8) at a separation surface of a threshing concave (3) in an agricultural harvester by at least one adjusting means, wherein the threshing concave (3) comprises at least a frame (4), a plurality of beater bars (6) and wires (7) forming the concave separation surface (9), wherein the width of the passage openings (8) is changeable by at least one adjusting device (10) arranged movably beneath the concave separation surface (9),
**characterised in that**
the adjusting device (10) comprises a plurality of adjusting tines (15) which are operatively connected together by way of at least one tine bar (30), and the adjusting device (10) includes adjusting tines (15) which are arranged on at least one displaceable tine bar (30) and which are movable between a position beneath the wires (7) on the same vertical plane into a position between adjacent wires (7), wherein the tine bar (30) is actuable by way of at least one cam (34) arranged on a switching shaft (16).

6. Apparatus for changing the passage opening of a threshing concave according to claim 5 **characterised in that** the adjusting tines (15) are arranged beneath the plane of the wires (7).

7. Apparatus for changing the passage opening of a threshing concave according to at least one of claims 5 and 6 **characterised in that** the adjusting tines (15) are respectively height-adjustably arranged between two adjacent beater bars (6) and/or wires (7).

8. Apparatus for changing the passage opening of a threshing concave according to at least one of claims 5 to 7 **characterised in that** the spacing of the adjusting devices (10) and/or adjusting tines (15) relative to each other is identical and/or different.

9. Apparatus for changing the passage opening of a threshing concave according to at least one of claims 5 to 8 **characterised in that** the tine bar (30) is operatively connected by means of a connecting element (22) to at least one bracket (17) stationarily fixed to the beater bar (6).

10. Apparatus for changing the passage opening of a threshing concave according to at least one of claims 5 to 9 **characterised in that** the tine bar (30) is guided in a slot (33) by means of a bolt (20).

11. Apparatus for changing the passage opening of a threshing concave according to at least one of claims 5 to 10 **characterised in that** the cam (34) is guided within a switching sliding gate (35).

12. Apparatus for changing the passage opening of a threshing concave according to at least one of claims 5 to 11 **characterised in that** the switching shaft (16) is switched by a control device (19a).

13. Apparatus for changing the passage opening of a threshing concave according to at least one of claims 5 to 12 **characterised in that** the control device (19a) is arranged externally on the threshing concave (3).

14. Apparatus for changing the passage opening of a threshing concave according to at least one of claims 5 to 13 **characterised in that** adjustment of the adjusting device (10) can be effected manually, mechanically, by motor means and/or hydraulically.

15. Apparatus for changing the passage opening of a threshing concave according to at least one of claims 5 to 14 **characterised in that** the adjusting device (10) covers a partial region or the entire region beneath the threshing concave (3).

16. Apparatus for changing the passage opening of a threshing concave according to at least one of claims 5 to 15 **characterised in that** the adjusting device (10) is interchangeable.

17. Apparatus for changing the passage opening of a threshing concave according to at least one of claims 5 to 16 **characterised in that** the tine bar (30) is actuated with at least one switching shaft (16).

18. Apparatus for changing the passage opening of a threshing concave according to at least one of claims 5 to 17 **characterised in that** the tine bar (30) is actuated at at least one location.

## Revendications

1. Procédé d'ajustement d'ouvertures de passage (8) sur une surface de séparation d'un panier de batteuse (3) dans une moissonneuse agricole, par au moins un moyen d'ajustement, dans lequel le panier de batteuse (3) est constitué d'au moins un châssis (4), de plusieurs battoirs (6) et de fils métalliques (7), qui forment la surface de séparation (9) du panier, la largeur des ouvertures de passage (8) pouvant être modifiée par au moins un dispositif de réglage (10) aménagé mobile en dessous de la surface de séparation (9) du panier,
**caractérisé en ce que**
le dispositif de réglage (10) comprend des dents de réglage (15) aménagées sur au moins une languette de dent ajustable (30), lesquelles dents peuvent être déplacées d'une position se trouvant en dessous des fils métalliques (7) dans le même plan vertical à une position se trouvant entre des fils métalliques (7) adjacents.

2. Procédé d'ajustement des ouvertures de passage
d'un panier de batteuse selon la revendication 1, **caractérisé en ce que**
le dispositif de réglage (10) est guidé par le bas entre les fils métalliques (7) du panier de batteuse (3).

3. Procédé d'ajustement des ouvertures de passage d'un panier de batteuse selon au moins l'une quelconque des revendications précédentes, **caractérisé en ce que**
le dispositif de réglage (10) est guidé latéralement
et/ou vers le haut entre les fils métalliques (7).

4. Procédé d'ajustement des ouvertures de passage d'un panier de batteuse selon au moins l'une quelconque des revendications précédentes,
**caractérisé en ce que**
le dispositif de réglage (10) est renvoyé vers le bas et/ou latéralement dans sa position de départ.

5. Dispositif d'ajustement d'ouvertures de passage (8) sur une surface de séparation d'un panier de batteuse (3) sur une moissonneuse agricole, par au moins un moyen d'ajustement, dans lequel le panier de batteuse (3) est constitué d'au moins un châssis (4), de plusieurs battoirs (6) et de fils métalliques (7), qui forment la surface de séparation (9) du panier, dans lequel la largeur des ouvertures de passage (8) peut être réglée par au moins un dispositif de réglage (10) aménagé mobile en dessous de la surface de séparation (9) du panier,
**caractérisé en ce que**
le dispositif de réglage (10) est constitué de plusieurs dents de réglage (15), qui sont en coopération mutuelle via au moins une languette de dent (30) tandis que le dispositif de réglage (10) comprend des dents de réglage (15) aménagées sur au moins une languette de dent ajustable (30), lesquelles dents peuvent être déplacées d'une position se trouvant en dessous des fils métalliques (7) dans le même plan vertical à une position se trouvant entre des fils métalliques (7) adjacents, la languette de dent (30) pouvant être commandée via au moins une came (34) aménagée sur un arbre de commande (16).

6. Dispositif d'ajustement de l'ouverture de passage
d'un panier de batteuse selon la revendication 5, **caractérisé en ce que**
les dents de réglage (15) sont aménagées en dessous du plan des fils métalliques (7).

7. Dispositif d'ajustement de l'ouverture de passage d'un panier de batteuse selon au moins l'une quelconque des revendications 5 et 6,
**caractérisé en ce que**
les dents de réglage (15) sont aménagées réglables en hauteur respectivement entre deux battoirs (6) et/ou fils métalliques (7) adjacents.

8. Dispositif d'ajustement de l'ouverture de passage d'un panier de batteuse selon au moins l'une quelconque des revendications 5 à 7,
**caractérisé en ce que**
la distance mutuelle des dispositifs de réglage (10) et/ou des dents de réglage (15) est égale et/ou différente.

9. Dispositif d'ajustement de l'ouverture de passage d'un panier de batteuse selon au moins l'une quelconque des revendications 5 à 8,
**caractérisé en ce que**
la languette de dent (30) est en coopération via un élément de liaison (22) avec au moins une console (17) aménagée fixe sur le battoir (6).

10. Dispositif d'ajustement de l'ouverture de passage d'un panier de batteuse selon au moins l'une quelconque des revendications 5 à 9,
**caractérisé en ce que**
la languette de dent (30) est guidée dans un trou
allongé (33) au moyen d'un boulon (20).

11. Dispositif d'ajustement de l'ouverture de passage d'un panier de batteuse selon au moins l'une quelconque des revendications 5 à 10,
**caractérisé en ce que**
la came (34) est guidée à l'intérieur d'une coulisse de commande (35).

12. Dispositif d'ajustement de l'ouverture de passage d'un panier de batteuse selon au moins l'une quelconque des revendications 5 à 11,
**caractérisé en ce que**
l'arbre de commande (16) est commandé par un dispositif de réglage (19a).

13. Dispositif d'ajustement de l'ouverture de passage d'un panier de batteuse selon au moins l'une quelconque des revendications 5 à 12,
**caractérisé en ce que**
le dispositif de réglage (19a) est aménagé côté extérieur sur le panier de batteuse (3).

14. Dispositif d'ajustement de l'ouverture de passage d'un panier de batteuse selon au moins l'une quelconque des revendications 5 à 13,
**caractérisé en ce que**
le réglage du dispositif de réglage (10) peut se faire par voie manuelle, mécanique, motrice et/ou hydraulique.

15. Dispositif d'ajustement de l'ouverture de passage d'un panier de batteuse selon au moins l'une quelconque des revendications 5 à 14,
**caractérisé en ce que**
le dispositif de réglage (10) recouvre une zone partielle ou la zone totale qui se situe en dessous du panier de batteuse (3).

16. Dispositif d'ajustement de l'ouverture de passage d'un panier de batteuse selon au moins l'une quelconque des revendications 5 à 15,
**caractérisé en ce que**
le dispositif de réglage (10) est interchangeable.

17. Dispositif d'ajustement de l'ouverture de passage d'un panier de batteuse selon au moins l'une quelconque des revendications 5 à 16,
**caractérisé en ce que**
la languette de dent (30) est commandée par au moins un arbre de commande (16).

18. Dispositif d'ajustement de l'ouverture de passage d'un panier de batteuse selon au moins l'une quelconque des revendications 5 à 17,
**caractérisé en ce que**
la languette de dent (30) est commandée en au moins un point.
